# EUROPEAN PATENT APPLICATION

(11) **EP 4 589 513 A1**
(43) Date of publication of application: **23.07.2025**
(21) Application number: 23864955.2
(22) Date of filing: 29.03.2023
(51) Int. Cl.: G06Q 10/10, G06F 40/169, G06F 40/253, G06Q 10/00, G06Q 50/18

(54) **CORRECTION SUGGESTING METHOD, CORRECTION SUGGESTING SYSTEM, AND CORRECTION SUGGESTING PROGRAM**

(30) Priority: 15.09.2022 JP 2022146984; 17.10.2022 JP 2022166484; 08.11.2022 JP 2022178635
(71) Applicant: Legalon Technologies, Inc., Tokyo 150-6219 (JP)
(72) Inventor: MATSUBA, Akihiko, Tokyo 150-6219 (JP); SUZUKI, Chie, Tokyo 150-6219 (JP); OHATA, Aya, Tokyo 150-6219 (JP); YAMADA, Taizo, Tokyo 150-6219 (JP)
(74) Representative: Hoffmann Eitle
(86) International application number: PCT/JP2023/012922
(87) International publication number: WO 2024/057589

(57) **Abstract**

In a correction proposal method, a processor stores pre-correction information that is content before correction of an item in a first contract document and post-correction information that is an item after correction amended from the item before correction in a memory in association with each other, and provides correction proposal information regarding proposal of a correction to a target item in a second contract document different from the first contract document based on the post-correction information.

## Description

### Technical Field

The present disclosure relates to a correction proposal method, a correction proposal system, and a correction proposal program.

### Background Art

Conventionally, there have been known techniques for proposing corrections to a document based on a past correction history.

For example, in an apparatus described in Patent Literature 1, detection means detects that a first item is edited, notification means notifies an operator to edit a second item corresponding to the first item that is the target of the detected editing, and presentation means presents, as an editing candidate, information after editing corresponding to information before editing when the information before editing stored in storage means storing the information before editing and the information after editing is included in information of the second item to be edited.

### Citation List

### Patent Literature

Patent Literature 1: Japanese Patent Laid-Open No. 2013-058168

### Summary of Invention

### Technical Problem

However, the system described in Patent Literature 1 merely displays an editing candidate for the second item in response to the editing of the first item, and may not be suitable for proposing a correction to a contract document.

Therefore, an aspect of the present invention aims to provide a correction proposal method, a correction proposal system, and a correction proposal program that are capable of proposing a suitable correction to a contract document.

### Solution to Problem

In a correction proposal method according to an aspect of the present invention, a processor stores pre-correction information that is content before correction of an item in a first contract document and post-correction information that is an item after correction amended from the item before correction in a memory in association with each other, and provides correction proposal information regarding proposal of a correction to a target item in a second contract document different from the first contract document based on the post-correction information.

### Advantageous Effect of Invention

According to an aspect of the present invention, it is possible to provide a correction proposal method, a correction proposal system, and a correction proposal program that are capable of proposing a suitable correction to a contract document.

### Brief Description of Drawings

[Figure 1] Figure 1 is a diagram illustrating an overview of processing in a correction proposal system 100 that is an embodiment of the present invention.
[Figure 2] Figure 2 is a diagram illustrating a configuration of the correction proposal system 100 that is an embodiment of the present invention.
[Figure 3] Figure 3 is a diagram illustrating an example of contract document information stored in a storage unit 110.
[Figure 4] Figure 4 is a diagram illustrating an example of item information stored in the storage unit 110.
[Figure 5A] Figure 5A is a diagram illustrating an example of correction steps in the correction proposal system 100.
[Figure 5B] Figure 5B is a diagram illustrating an example of correspondence information stored in the storage unit 110.
[Figure 6] Figure 6 is a diagram illustrating an example of provision of correction proposal information by a correction proposal unit 170.
[Figure 7] Figure 7 is a diagram illustrating an example of provision of correction proposal information by the correction proposal unit 170.
[Figure 8] Figure 8 is a flowchart illustrating an example of processing in the correction proposal system 100.
[Figure 9] Figure 9 is a diagram illustrating a first variant of a configuration of a correction proposal system 100a that is an embodiment of the present invention.
[Figure 10A] Figure 10A is a diagram illustrating an example of a screen for performing an operation for changing the order of corrections to a first contract document.
[Figure 10B] Figure 10B is a diagram illustrating an example of a screen for performing an operation for changing the order of corrections to the first contract document.
[Figure 11] Figure 11 is a diagram illustrating an example of a hardware configuration of a computer 1100.

### Description of Embodiments

Embodiments according to the present invention will be described with reference to the drawings.

Note that as used herein, a "unit" does not simply mean physical means, but cases where the functions of the "unit" are implemented by software are included. The functions of one "unit" or apparatus may be implemented by two or more physical means, apparatuses, or pieces of software, or the functions of two or more "units" or apparatuses may be implemented by one physical means, apparatus, or piece of software.

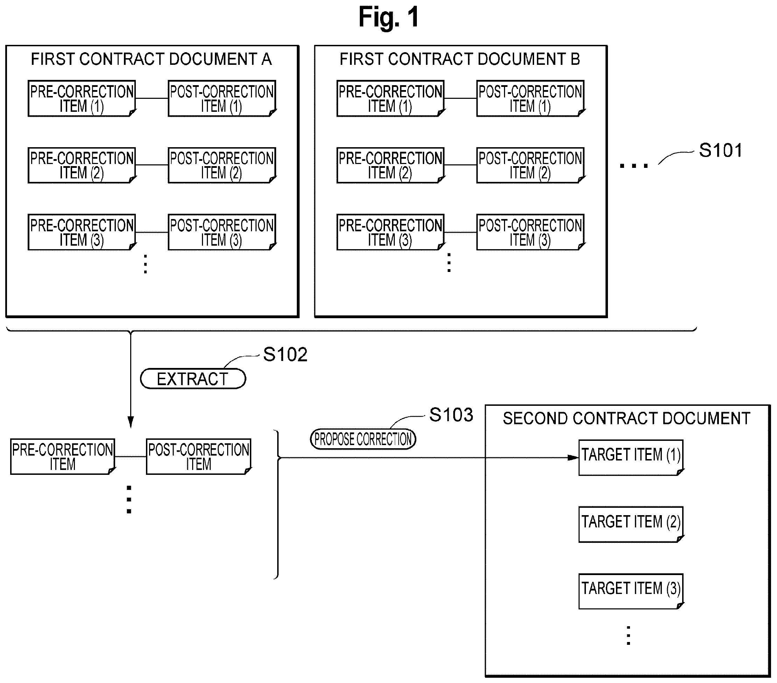

Figure 1 is a diagram illustrating an overview of processing in a correction proposal system 100 that is an embodiment of the present invention.

When a contract is concluded, an agreement between contracting parties is made. When an agreement between the contracting parties is made, one or both of the contracting parties may inspect and amend a contract document. As an example, in the case of a contract between companies, for example, the legal department in charge of contract inspection inspects the content of a contract document and amends it as necessary. Note that the inspection of a contract document may also be referred to as confirmation, examination, or review.

The correction proposal system 100 of this embodiment proposes a correction to a contract document based on past cases.

The correction proposal system 100 of this embodiment is an information processing system implemented by a correction proposal program, and is an information processing system that, based on correspondence in which the contents before and after correction of an item in a first contract document are associated with each other, proposes a correction to the content of a target item in a second contract document that is different from the first contract document.

First, a user uploads first contract documents before and after correction to the correction proposal system 100. The correction proposal system 100 divides each of the first contract documents before and after correction by item (e.g., by article), and stores, in a memory, correspondence information in which the contents before and after correction of an item in the first contract documents are associated with each other (S101).

Subsequently, the user uploads a second contract document different from the first contract documents (i.e., a contract document subject to a correction proposal process performed by the correction proposal system 100, for example, a contract document that the user intends to inspect) to the correction proposal system 100. The correction proposal system 100 divides the second contract document by item, and extracts correspondence information based on target information indicating a target item subject to correction proposal in the second contract document (S102).

Then, the correction proposal system 100 provides a user terminal with correction proposal information regarding proposal of a correction to a target article in the second contract document based on the extracted correspondence information (in particular, for example, post-correction information indicating the content after correction) (S103). The user amends the content of the target item in the second contract document as necessary while referring to the correction proposal information.

Note that a contract document to be processed by the correction proposal system 100 is a document in an electronic medium (an electronic document). That is, a contract document is, for example, an electronic document created by predetermined electronic document creation software, or an electronic document obtained by digitizing a paper contract document using a predetermined image analysis technique (e.g., OCR (Optical Character Recognition) technology). Contract documents to be processed by the correction proposal system 100 are, for example, documents that include clauses and generate predetermined legal effects, and include application forms, memorandums, and the like.

Contract documents to be processed by the correction proposal system 100 include not only a contract document agreed upon by both parties, but also a contract document being confirmed by both parties (i.e., a draft of the contract document), a contract document that has been exchanged between the parties but has not reached an agreement, or contract document templates created for reference when contracting with others. In the description related to this embodiment, unless otherwise specified, "contract documents" include not only a contract document agreed upon by both parties, but also a contract document being confirmed by both parties (i.e., a draft of the contract document), a contract document that has been exchanged between the parties but has not reached an agreement, or contract document templates created for reference when contracting with others.

The correction proposal system 100 may not perform the processes described later (e.g., an item division process, a process of associating contents before and after correction, and a correction proposal process) for all of the contract documents to be processed. That is, the correction proposal system 100 may perform some of the processes described later for some of the contract documents.

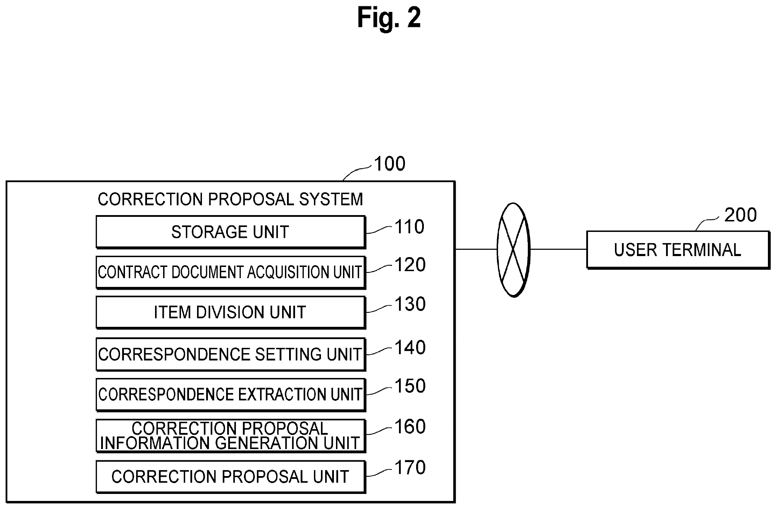

Figure 2 is a diagram illustrating a configuration of the correction proposal system 100 that is an embodiment of the present invention. The correction proposal system 100 is, for example, an information processing system that is communicatively connected to a user terminal 200 via a network such as the Internet. Details of the correction proposal system 100 will be described later.

The user terminal 200 is, for example, a computer used by a user of the correction proposal system 100, such as a smartphone, a tablet terminal, a personal computer, or the like.

For example, the user accesses the correction proposal system 100 through the user terminal 200 and uploads first contract documents before and after correction to the correction proposal system 100. Furthermore, the user uploads a second contract document to the correction proposal system 100 through the user terminal 200. Then, the user is provided with correction proposal information for a target item in the second contract document through the user terminal 200.

Note that only one user terminal 200 is shown in Figure 2, but the number of user terminals 200 is not limited thereto.

Subsequently, details of the correction proposal system 100 will be described. The correction proposal system 100 of this embodiment includes a storage unit 110, a contract document acquisition unit 120, an item division unit 130, a correspondence setting unit 140, a correspondence extraction unit 150, a correction proposal information generation unit 160, and a correction proposal unit 170. Each unit shown in Figure 2 can be implemented, for example, by using a storage area or by a processor executing a program stored in the storage area.

The storage unit 110 of this embodiment stores information processed in the correction proposal system 100. The storage unit 110 can store, for example, contract document information, item information, and correspondence information, which will be described later. The storage unit 110 may be, for example, a memory.

For example, the contract document acquisition unit 120 of this embodiment acquires contract document information related to contract documents (first contract documents and a second contract document) and stores it in the storage unit 110. The contract document acquisition unit 120 can acquire contract document information of a first contract document before correction, a first contract document after correction, and a second contract document.

Here, the contract document information is information related to contract documents, and includes, for example, status information, position information, contract type information, and contract document content information.

The status information is information indicating the status of a contract document, for example, information indicating the correction status of the contract document. The status information may be one of, for example, "the other party's draft" indicating that it is a draft (e.g., the first draft) of the counterparty to the contract, "the other party's correction proposal" indicating that it is a contract document amended by the counterparty to the contract, "reviewed" indicating that it is a contract document that has been confirmed by one's own company (the business to which the user belongs), or "concluded" indicating that the agreement between the contracting parties has been completed.

The position information of this embodiment is information indicating the position of a contract document, and is, for example, information indicating the position of one's own company (the business to which the user belongs). The position information may be, for example, "consigning side" indicating that it is the consignor side in a business consignment agreement, or "disclosing side" indicating the disclosing side of confidential information in a non-disclosure agreement.

The contract type information of this embodiment is information indicating the type of a contract document, and may be, for example, a "business consignment agreement" or a "non-disclosure agreement".

The contract document content information of this embodiment is information (e.g., text data) indicating the content of a contract document.

The contract document acquisition unit 120 may acquire contract document information from the user terminal 200, for example. That is, the user may provide (upload) a contract document to the correction proposal system 100 through the user terminal 200, and the contract document acquisition unit 120 may acquire contract document information of the uploaded contract document.

At this time, the contract document acquisition unit 120 may acquire contract document information from the user through the operation of the user terminal 200, for example. In this case, for example, when the contract document is uploaded from the user terminal 200, the contract document acquisition unit 120 may receive input (e.g., input with a keyboard or selection of an item preset by the system) of at least some contract document information (e.g., status information, position information, and contract type information) from the user to acquire contract document information.

The contract document acquisition unit 120 may acquire contract document information from another information processing system, for example. In this case, for example, the user may provide contract document information to the other information processing system through the user terminal 200, and the contract document acquisition unit 120 may acquire contract document information provided from the other information processing system. Examples of other information processing systems include contract document management systems, document management systems, and storages on the cloud.

The contract document acquisition unit 120 may acquire, for example, at least some contract document information (e.g., status information, position information, and contract type information) by analyzing content information of the contract document.

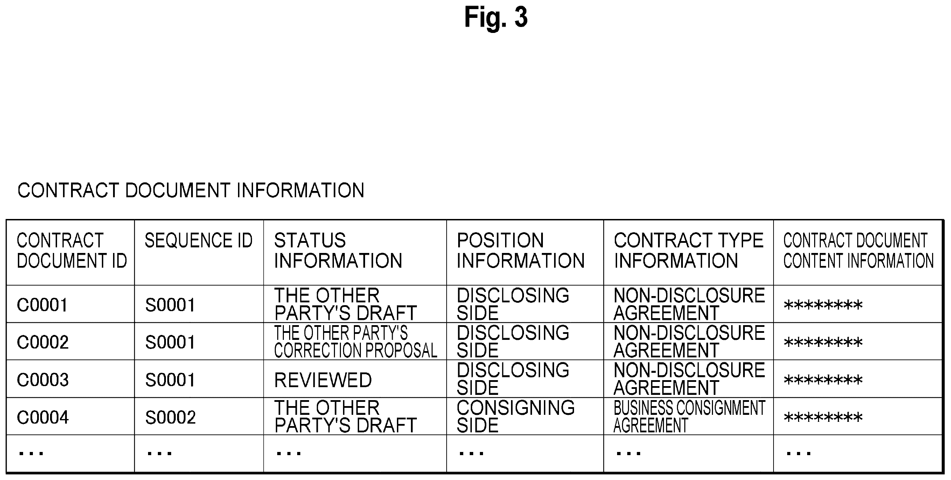

Figure 3 is a diagram illustrating an example of contract document information stored in the storage unit 110. The contract document information stored in the storage unit 110 includes, for example, a contract document ID, a sequence ID, status information, position information, contract type information, and contract document content information.

The contract document ID of this embodiment is information identifying a contract document processed in the correction proposal system 100. The contract document ID is identification information that is given so as to be able to identify each of contract documents before and after correction in the same contract, that is, the contract document ID is information that uniquely identifies a contract document (i.e., an electronic document) acquired by the contract document acquisition unit 120.

The sequence ID of this embodiment is information that identifies a contract indicated by a contract document processed in the correction proposal system 100. That is, the sequence ID is, for example, a unit for managing a series of contract documents that have been drafted, amended, and agreed upon (i.e., a plurality of contract documents such as a contract document at the time of drafting, a contract document being amended, and a contract document agreed upon, for the purpose of concluding a contract).

More specifically, the same sequence ID may be associated with a plurality of contract documents having different contract document IDs. That is, when there are contract documents before and after correction in the same contract, each of the contract documents before and after correction has a different contract document ID, but each of the contract documents before and after correction has the same sequence ID. This enables the correction proposal system 100 to recognize the corresponding contract documents before and after correction (i.e., which contract document has been reached as a result of which contract document has been amended).

The contract document acquisition unit 120 of this embodiment may generate a sequence ID, for example, in response to the operation of the user terminal 200 by the user. Specifically, when the user uploads a first contract document before correction, for example, the first contract document before correction may be uploaded to an area where the first contract document is managed (e.g., a virtual folder managed on the correction proposal system 100) to generate a specific sequence ID (e.g., a sequence ID corresponding to the virtual folder or the same sequence ID as the sequence ID of the first contract document before correction).

When a first contract document after correction is uploaded by the user, the contract document acquisition unit 120 may generate the sequence ID of the already-uploaded first contract document (or generate a plurality of sequence ID candidates and present them to the user terminal 200) as a sequence ID of the first contract document after correction based on the similarity of content between the first contract document after correction and the first contract document already uploaded to the correction proposal system 100. This enables the user to easily perform the sequence ID generation process at the time of uploading the first contract document after correction.

Here, the contract document acquisition unit 120 may evaluate the similarity between the first contract document after correction and the first contract document already uploaded to the correction proposal system 100, for example, based on the contracting parties in the first contract document, the creation dates of the first contract documents before and after correction, and the contract document information (e.g., status information, position information, contract type information, and contract document content information) in each of the first contract documents before and after correction.

The item division unit 130 of this embodiment divides the content of a contract document by item included in the contract document based on the contract document information, and stores item information related to the items in the storage unit 110.

Here, an item may correspond to, for example, an article included in a contract document. That is, the item division unit 130 can divide the content of a contract document, for example, by "article" or by "paragraph".

The item division unit 130 can analyze the content of a contract document and divide the content of the contract document by item based on the positions of characters corresponding to items (e.g., characters of "Article" or "Paragraph"), for example. Note that the item division unit 130 may not divide all contract documents by item, or may not divide all items in a contract document by item. That is, the item division process performed by the item division unit 130 may be performed only on some of the contract documents, or may be performed only on a part of a contract document.

When the contract document acquisition unit 120 acquires the contract document information of the first contract document before correction, the item division unit 130 can divide the first contract document before correction by item to generate pre-correction information indicating the content before correction for each item as item information.

When the contract document acquisition unit 120 acquires the contract document information of the first contract document after correction, the item division unit 130 can divide the first contract document after correction by item to generate post-correction information indicating the content after correction for each item as item information.

When the contract document acquisition unit 120 acquires the contract document information of the second contract document, the item division unit 130 can divide the second contract document by item to generate target information indicating a target item subject to correction proposal in the second contract document as item information.

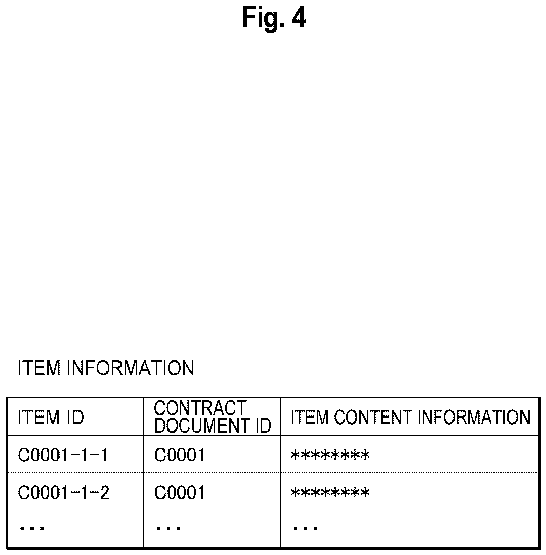

Figure 4 is a diagram illustrating an example of item information stored in the storage unit 110. The item information stored in the storage unit 110 includes, for example, an item ID, a contract document ID, and item content information.

The item ID of this embodiment is information for identifying item information processed in the correction proposal system 100. The item content information of this embodiment is information indicating the content corresponding to an item, such as information indicating the content of each clause.

Note that whether the item information stored in the storage unit 110 is pre-correction information, post-correction information, or target information may be determined based on, for example, the contract document ID included in the item information (specifically, for example, based on the status information corresponding to the contract document ID).

The correspondence setting unit 140 of this embodiment generates correspondence information in which pre-correction information is associated with post-correction information, and stores it in the storage unit 110.

The correspondence information of this embodiment is information that associates the content before correction with the content after correction for each item in a first contract document, and specifically, information indicating correspondence between the pre-correction information and the post-correction information in the same item in a plurality of contract documents of the same sequence.

In this embodiment, a plurality of contract documents of the same sequence are, for example, a plurality of contract documents having the same sequence ID.

The case where items in a plurality of contract documents of the same sequence are the same is, for example, a case where the pre-correction information and the post-correction information are items corresponding to each other.

Note that both the item corresponding to the pre-correction information and the item corresponding to the post-correction information may have the same item ID (in other words, for example, the article number or the article and paragraph numbers). Specifically, when both the pre-correction information and the post-correction information correspond to "Article 1" in the first contract document, the correction proposal system 100 may determine that the items of the pre-correction information and the post-correction information in the plurality of contract documents of the same sequence are the same.

The item corresponding to the pre-correction information and the item corresponding to the post-correction information may have different item IDs. In this case, the correction proposal system 100 may determine that the items of the pre-correction information and the post-correction information in the plurality of contract documents of the same sequence are the same based on, for example, the contents indicated by the pre-correction information and the post-correction information.

Specifically, when the content indicated by the pre-correction information and the content indicated by the post-correction information are both related to the scope of responsibility of a contracting party, both of them correspond to the same item, regardless of whether their item IDs are the same or different. On the other hand, when the content indicated by the pre-correction information indicates the expiration date of the contract and the content indicated by the post-correction information indicates the scope of responsibility of a contracting party, both of them do not correspond to the same item, regardless of whether their article numbers are the same or different.

The item ID may be linked to issues that appear in the contract or contract type. For example, it may be linked to issues such as information indicating whether the contract is automatically renewed, governing law, and jurisdiction. For example, when the contract type is a non-disclosure agreement, the item ID may be given in association with issues that appear according to the contract type (e.g., issues such as the scope of confidential information or disposal of confidential information when the contract type is a non-disclosure agreement).

Note that the correction proposal system 100 may determine that the items of the pre-correction information and the post-correction information in the plurality of contract documents of the same sequence are the same based on both the matching status of the item IDs and the matching status of the contents. At this time, the correction proposal system 100 may place more emphasis on either the matching status of the item IDs or the matching status of the contents based on a predetermined priority. When determining that the items in the plurality of contract documents of the same sequence are the same, the correction proposal system 100 may determine that the items in the plurality of contract documents of the same sequence are the same when they match each other more than other items even when the matching status of the item IDs or the contents do not show an exact match.

The order of the item division process performed by the item division unit 130 in the first contract document and the process performed by the correspondence setting unit 140 does not matter. That is, based on the contract document information, the correspondence setting unit 140 may set the correspondence of the first contract documents before and after correction and then the item division unit 130 may perform the item division process to generate the correspondence information between the pre-correction information and the post-correction information for each item, or after the item division unit 130 performs the item division process, the correspondence setting unit 140 may perform the process of generating correspondence information for each item.

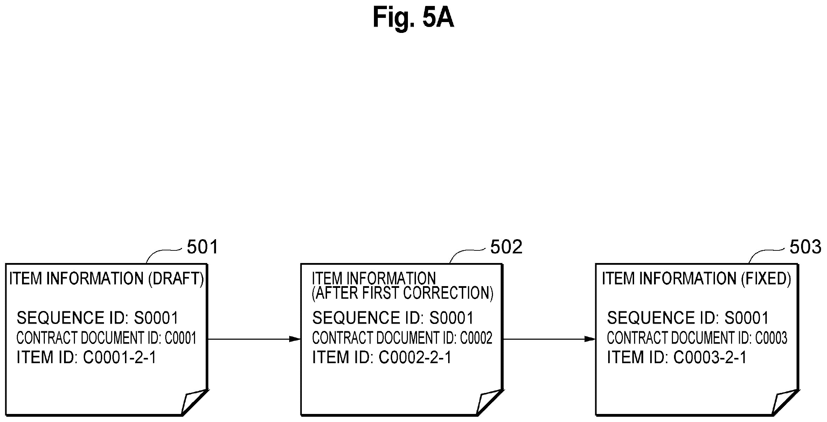

Figure 5A is a diagram illustrating an example of correction steps in the correction proposal system 100 of this embodiment. Item information 501 is item information at the time of a draft. Item information 502 is item information after the first correction obtained by making a correction (first correction) to the item information 501. Item information 503 is item information obtained by making a correction (second correction) to the item information 502 and fixing it. In any of the pieces of item information, the sequence ID is the same.

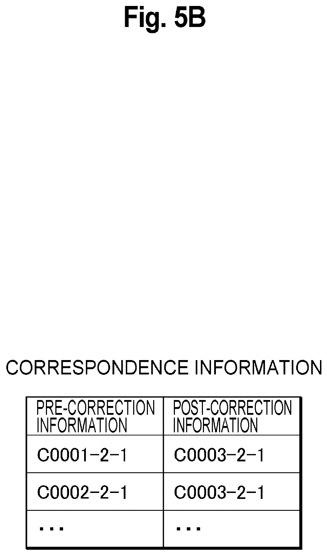

Figure 5B is a diagram illustrating an example of correspondence information stored in the storage unit 110. The example of correspondence information shown in Figure 5B corresponds to the example of the correction steps shown in Figure 5A. The correspondence information stored in the storage unit 110 includes, for example, pre-correction information and post-correction information. As the pre-correction information and the post-correction information, the correspondence information may include, for example, their corresponding item IDs.

When the corrections shown in Figure 5A are made, the correspondence information stored in the storage unit 110 are, for example, as shown in the example of Figure 5B. That is, for example, the correspondence information holds the item information 501 and 502 as pre-correction information, and the item information 503 is held as post-correction information so as to correspond to the item information 501 and 502.

Note that the correspondence information may hold the item information 502 (in this case, "C0002-2-1") as the post-correction information corresponding to the item information 501 of the pre-correction information (in this case, "C0001-2-1") instead of the item information 503 (in this case, "C0003-2-1"), or may hold both the item information 502 and the item information 503. This enables the correction proposal system 100 to have correspondence information in each correction step.

The correspondence extraction unit 150 of this embodiment extracts at least one piece of correspondence information among the pieces of pre-correction information and the pieces of post-correction information on an item basis in the respective first contract documents based on the target information in the second contract document.

The correspondence extraction unit 150 can extract at least one piece of correspondence information based on the degree of relevance between the pre-correction information and the target information. Specifically, the correspondence extraction unit 150 can extract correspondence information (in particular, for example, post-correction information associated with pre-correction information) corresponding to pre-correction information including an item having a high degree of relevance to the target item indicated by the target information.

Here, the degree of relevance is, for example, a degree of relevance between the content indicated by the pre-correction information and the content indicated by the target information. Specifically, the degree of relevance may be a degree of relevance based on at least one of, for example, the contents of the pre-correction information and the target information, the position or contract type in the first contract document corresponding to the pre-correction information and the second contract document corresponding to the post-correction information, and issues included in the pre-correction information and target article information.

The degree of relevance based on the contents of the pre-correction information and the target information is, for example, the degree of relevance between the contents of the item (e.g., the contents of the article) indicated by the pre-correction information and the target information. That is, for example, when the content indicated by the pre-correction information is evaluated to be similar to the content indicated by the target information based on a predetermined natural language process, the degree of relevance may be evaluated to be high. This enables the correction proposal system 100 to extract pre-correction information having content similar to that of the target information, and to perform the correction proposal process without the user amending the content of the target information.

The degree of relevance based on the positions or contract types in the first contract document corresponding to the pre-correction information and the second contract document corresponding to the post-correction information may be evaluated to be high, for example, when the positions or contract types in the first contract document and the second contract document are the same. This enables the correction proposal system 100 to extract pre-correction information of the first contract document in a position or contract type similar to that of the second contract document and to perform the correction proposal process.

The issues included in the pre-correction information and the target information are, for example, matters to be noted in the contents indicated by the pre-correction information and the target information. That is, issues are, for example, matters that one's own company should particularly confirm in contract documents with the other company, such as the definitions of the terms described or the scope indicated by the content described.

The degree of relevance based on the issues may be evaluated to be high when the issues included in the pre-correction information and the target information are the same or similar. This enables the correction proposal system 100 to extract pre-correction information having the same or similar issues as those of the target information and to make a correction proposal.

Here, the issues may be set in advance by an administrator of the correction proposal system 100 so as to correspond to predetermined contents. The issues may be set to parts frequently amended by the user based on the correspondence information.

Note that the correction proposal system 100 can extract issues by analyzing the content of a contract document based on a predetermined natural language process.

The degree of relevance may be a degree of relevance based on comment information indicating the contents of comments included in electronic files of the contract documents (the first contract document or the second contract document).

Here, a comment is, for example, an annotation in which a user (e.g., a person in charge of the contracting party (i.e., their own company) who uses the correction proposal system 100) writes the intention of or concern about the correction content or the like at the time of inspection of a contract document. Note that a comment may be an annotation written by a person in charge of the other contracting party (i.e., the other company).

The comment information of this embodiment is information indicating the contents of comments and is included in an electronic file of a contract document uploaded by the user. The correction proposal system (in particular, for example, the contract document acquisition unit 120) can acquire comment information as contract document information when the user uploads a contract document.

The degree of relevance based on the comment information may be evaluated to be high, for example, when the contents of the comments of the pre-correction information and the target information are the same or similar. This enables the correction proposal system 100 to extract pre-correction information with the same or a similar comment, and to make a correction proposal without the user amending the content of the target information.

Note that items that are prioritized in calculating the degree of relevance between the pre-correction information and the target information may be set by an administrator or user of the correction proposal system 100. That is, for example, when the user configures settings so that the degree of relevance is calculated by prioritizing the position over the content in a contract document, the correspondence extraction unit 150 may be configured not to extract the correspondence information of pre-correction information in which the position is not the same as that in the target information even when the content in the pre-correction information is similar to that in the target information. This enables the correction proposal system 100 to extract pre-correction information more suitable for correction by the user.

In this way, the correspondence extraction unit 150 can extract correspondence information suitable for a correction proposal to the target item in the second contract document.

More specifically, the correspondence extraction unit 150 can extract, for example, correspondence information corresponding to pre-correction information related to the target item (i.e., for example, pre-correction information having content similar to that of the target item). In this case, since the content indicated by the target information and the content indicated by the pre-correction information are similar to each other, the content of the correction in the first contract document corresponding to the pre-correction information may also be suitable in the second contract document corresponding to the target information. Therefore, the correspondence extraction unit 150 can extract correspondence information suitable for a correction proposal to the target item in the second contract document.

The correction proposal information generation unit 160 of this embodiment generates correction proposal information regarding proposal of a correction to the target article in the second contract document based on the post-correction information, and stores it in the storage unit 110. More specifically, the correction proposal information generation unit 160 can generate correction proposal information regarding proposal of a correction to the target article in the second contract document based on the post-correction information included in the extracted at least one piece of correspondence information.

Here, the correction proposal information is information for proposing a correction of the target item to the user.

The correction proposal information may include, for example, the post-correction information included in the extracted at least one piece of correspondence information. This enables the user to grasp past correction contents and then amend the target item.

In addition to the post-correction information, the correction proposal information may further include comment information given by the user in amending the article before correction (i.e., comment information included in the electronic file of the first contract document before correction). This enables the user to grasp the comments in the past correction steps and then amend the target item.

In addition to the post-correction information, the correction proposal information may include at least one of the position information and the contract type information indicating the position and the contract type in the first contract document. This enables the user to grasp the position or the contract type in the first contract document corresponding to the correction proposal information and then amend the target item.

In addition to the post-correction information, the correction proposal information may further include information on whether or not the correction has been adopted (e.g., status information). Here, whether or not the correction has been adopted may be determined, for example, based on the status information of the contract document corresponding to the post-correction information. That is, when the contract document has been "concluded" or the status information of another contract document having the same sequence ID as the contract document is "concluded" and the content of the item corresponding to the post-correction information is not amended, it may be determined that the correction has been adopted. In addition to the post-correction information, the correction proposal information may include the status information of "concluded". This enables the user to grasp whether or not the content after correction indicated by the correction proposal information is content that has been agreed upon, and whether or not it is a correction that is likely to be adopted in the current contract document under inspection as well. Note that when it is unknown whether or not the correction has been adopted, the correction proposal information may or may not include information to the effect that it is unknown whether the correction has been adopted.

The correction proposal information is not limited to being prepared by the user, but may be prepared or set by others. For example, it may be prepared in advance by a vendor that provides the correction proposal system for use by the user. This makes it possible to reduce the time and effort to set correction proposal information.

The above-mentioned vendor can revise the correction proposal information at any time for reasons such as adaptation to legal corrections. This enables the user to receive suitable correction proposals in a timely manner.

When it is necessary to modify the correction proposal information due to legal corrections or changes in criteria, a function may be provided to collectively revise correction proposals to a plurality of documents including similar issues. This enables the user to receive suitable correction proposals.

The correction proposal unit 170 of this embodiment provides correction proposal information to the user terminal 200. That is, the correction proposal unit 170 provides the user terminal 200 of the user with correction proposal information regarding proposal of a correction to the target article in the second contract document based on the extracted at least one piece of correspondence information.

The correction proposal unit 170 can display the results of a series of correction steps corresponding to the extracted correspondence information on the user terminal 200. Specifically, when a plurality of corrections (e.g., the first correction and the second correction) are made in the first contract document corresponding to the extracted correspondence information, the correction proposal unit 170 can display the result of the correction in the first correction and the result of the correction in the second correction on the user terminal 200. This enables the user to amend the target item after grasping the detailed steps of the corrections.

The correction proposal unit 170 can provide a plurality of pieces of correction proposal information based on a plurality of pieces of correspondence information to the user terminal 200. In this case, the plurality of pieces of correction proposal information may be associated with information indicating a predetermined order. Note that the predetermined order may be, for example, the order of the date and time when the correction corresponding to the post-correction information was made (e.g., the order of closeness of the date and time when the correction was made), and the order of the status information of the first contract document corresponding to the post-correction information (e.g., the order in which the status information of "concluded" is prioritized).

When providing a plurality of pieces of correction proposal information based on a plurality of pieces of correspondence information to the user terminal 200, the correction proposal unit 170 can collectively display similar pieces of correction proposal information (e.g., correction proposal information having similar content of the post-correction information or the pre-correction information) among the plurality of pieces of correction proposal information.

Specifically, for example, the correction proposal unit 170 can display, on the user terminal 200, one piece of correction proposal information (e.g., correction proposal information generated based on correspondence information corresponding to the latest post-correction information) among a plurality of pieces of correction proposal information similar to each other, and a button for further displaying other pieces of correction proposal information similar to the one piece of correction proposal information. At this time, the correction proposal unit 170 can further display correction proposal information that is not similar to the plurality of pieces of correction proposal information similar to each other. This enables the user to simplify the display of similar pieces of correction proposal information and to be provided with more pieces of correction proposal information.

At this time, the correction proposal unit 170 may change the display order according to the number of similar pieces of correction proposal information. That is, as the number of similar pieces of correction proposal information increases, the correction proposal unit 170 may make the display position higher on the screen of the user terminal 200. This enables the correction proposal system 100 to preferentially provide frequently used sentence examples to the user.

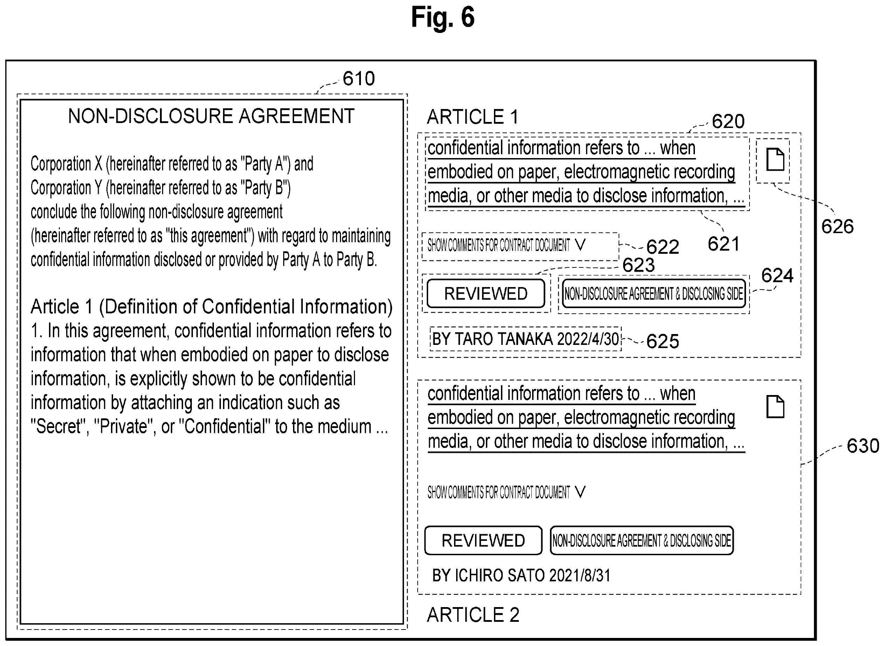

Figure 6 is a diagram illustrating an example of provision of correction proposal information by the correction proposal unit 170. The screen shown in Figure 6 shows an example of a display screen of the user terminal 200 on which correction proposal information is provided by the correction proposal unit 170.

The screen shown in Figure 6 includes an area 610 for displaying a second contract document and areas 620 and 630 for displaying correction proposal information for each item (e.g., article). The area 620 further includes an area 621 for displaying post-correction information, an area 622 showing a button for displaying comment information, an area 623 for displaying status information corresponding to the post-correction information, an area 624 for displaying contract type information and position information corresponding to the post-correction information, an area 625 for displaying the name of a person in charge who uploaded the first contract document after correction and its date, and an area 626 showing a button for referencing the first contract document after correction. Note that the area 630 includes areas corresponding to the areas included in the area 620.

In the area 621, the content of post-correction information is displayed as correction proposal information. That is, in the example of the screen shown in Figure 6, the post-correction information in the correspondence information extracted based on the description content of the target item (here, Article 1 in the second contract document) is displayed. The user can amend the target item while referring to the post-correction information displayed in the area 621.

The user can amend the target item while referring to the contents displayed in the areas 623, 624, and 625.

That is, for example, when the status information displayed in the area 623 is "reviewed", the user can recognize the correction proposal information displayed in the area 620 as, for example, information based on the first contract document that has been reviewed in their own company.

For example, when the contract type information and the position information displayed in the area 624 are the same as those in the second contract document, the user can recognize the correction proposal information displayed in the area 620 as information based on the first contract document of the same contract type or position as that of the second contract document.

For example, when the information indicating the person in charge and the date displayed in the area 625 indicates a reliable person in charge or indicates a date close to the present, the user can recognize the correction proposal information displayed in the area 620 as more suitable correction proposal information. That is, for example, the user can grasp whether or not the correction in the first contract document was made by a reliable person in charge or whether or not the correction in the first contract document was made on a date close to the present, and then determine whether or not to amend the second contract document based on the correction proposal information.

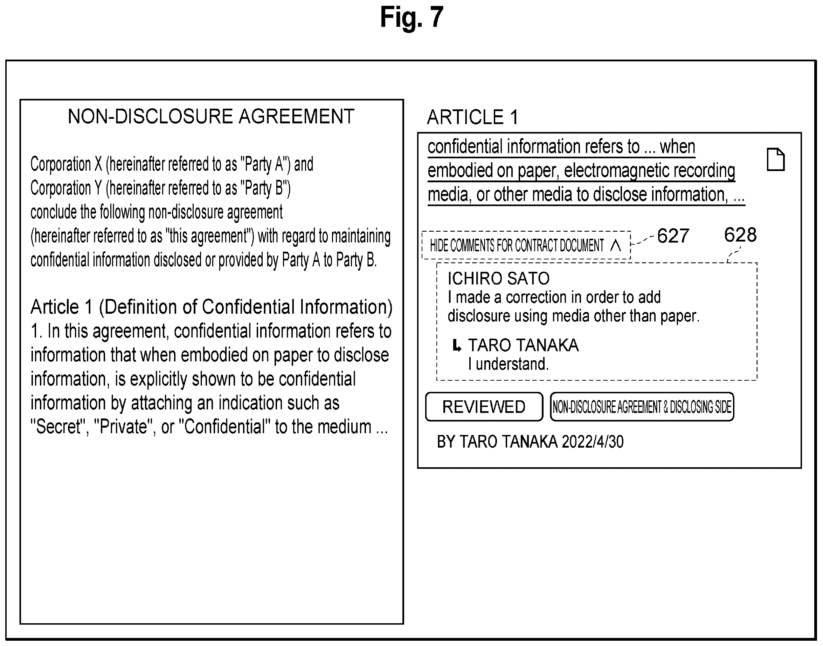

When the area 622 is selected, the screen switches to a screen shown in Figure 7 described later that displays comment information included in the first contract document after correction in the extracted correspondence information.

Then, the user can amend the target item while referring to the comment information. That is, for example, the user can grasp the intention of the correction in the first contract document included in the comment information and then determine whether or not to amend the second contract document based on the correction proposal information.

When the area 626 is selected, the first contract document after correction in the extracted correspondence information is displayed. The user can amend the target item while referring to the first contract document after correction. That is, for example, the user can grasp parts of other items of the first contract document after correction and then determine whether or not to amend the second contract document based on the correction proposal information.

Note that the displayed first contract document after correction may be displayed on the user terminal 200 as a window separate from the window displaying the screen shown in Figure 6.

Figure 7 is a diagram illustrating an example of provision of correction proposal information by the correction proposal unit 170. The example of the screen shown in Figure 7 corresponds to Figure 6, but shows an example of a screen when the area 622 in Figure 6 is selected and comment information is displayed.

The screen shown in Figure 7 includes an area 627 showing a button for hiding comment information in the first contract document after correction and an area 628 for displaying comment information in the first contract document after correction.

When the area 627 is selected, the screen switches to the screen shown in Figure 6 in which the comment information is not displayed.

The user can amend the target item while referring to the comment information displayed in the area 628. That is, for example, the user can grasp the intention of the correction in the first contract document included in the comment information, and then determine whether or not to amend the second contract document based on the correction proposal information.

The correction proposal unit 170 may display an area for accepting the registration of an evaluation such as a favorite and a flag related to a proposal from users on the user terminal 200. That is, for example, when the proposed correction proposal information is suitable, the user can register the correction proposal information in favorites. When providing correction proposal information to the user terminal 200, the correction proposal unit 170 may further provide information (e.g., a star mark) on whether or not it has been registered in favorites. The correction proposal system 100 may provide the user with a list of correction proposal information registered in favorites. The correction proposal unit 170 may preferentially provide correction proposal information registered in favorites to the user terminal 200. This enables the correction proposal system 100 to make a correction proposal more suitable for the user. Note that information such as an evaluation or a flag may be used only by an individual user who performed the operation of registering an evaluations or a flag, or may be available to other users, for example, users in the organization to which the user who performed the registration operation belongs. This makes it possible to share information about correction proposals within the organization and provide more suitable correction proposal information.

Thus, the correction proposal system 100 according to an embodiment of the present invention performs the correction proposal process for each item (e.g., clause or issue). This enables the user to easily perform a correction process of the second contract document by replacing the item proposed for correction. Specifically, the user can amend the second contract document by, for example, a simple replacement of the item proposed for correction without performing a correction process that needs to be dealt with by replacement of words (e.g., a correction process that needs to be grammatically dealt with, such as a correction related to syntactic dependency).

This is because an item (e.g., a clause or an issue) corresponds to a certain range of character strings indicating a certain meaning (e.g., a paragraph, a sentence, or a phrase) instead of a word or character unit, and because the correction proposal information generation unit 160 generates correction proposal information based on post-correction information divided by item.

Note that the correction proposal system 100 according to an embodiment of the present invention may use a word as an item. That is, the correction proposal system 100 may perform the correction proposal process for each word.

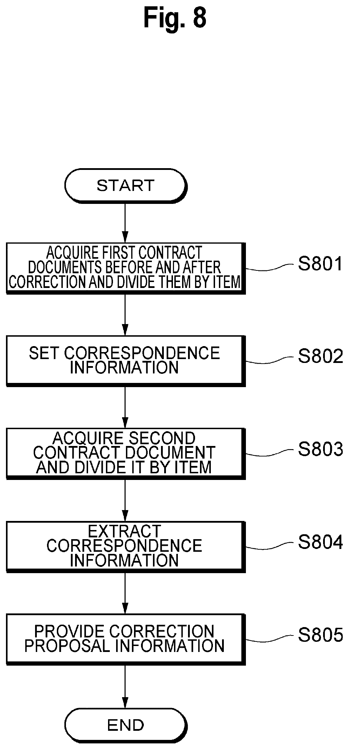

Figure 8 is a flowchart illustrating an example of processing in the correction proposal system 100.

First, the contract document acquisition unit 120 acquires contract document information related to first contract documents before and after correction, and the item division unit 130 divides them by item to generate pre-correction information and post-correction information (S801). Subsequently, the correspondence setting unit 140 sets correspondence between the pre-correction information and the post-correction information for each item (S802).

The contract document acquisition unit 120 acquires contract document information related to a second contract document, and the item division unit 130 divides the second contract document by item to generate target information (S803). Subsequently, the correspondence extraction unit 150 extracts at least one piece of correspondence information based on the target information (S804). Then, the correction proposal information generation unit 160 generates correction proposal information based on the post-correction information included in the extracted at least one piece of correspondence information, and the correction proposal unit 170 provides the correction proposal information to the user terminal 200 (S805).

### <Variant 1>

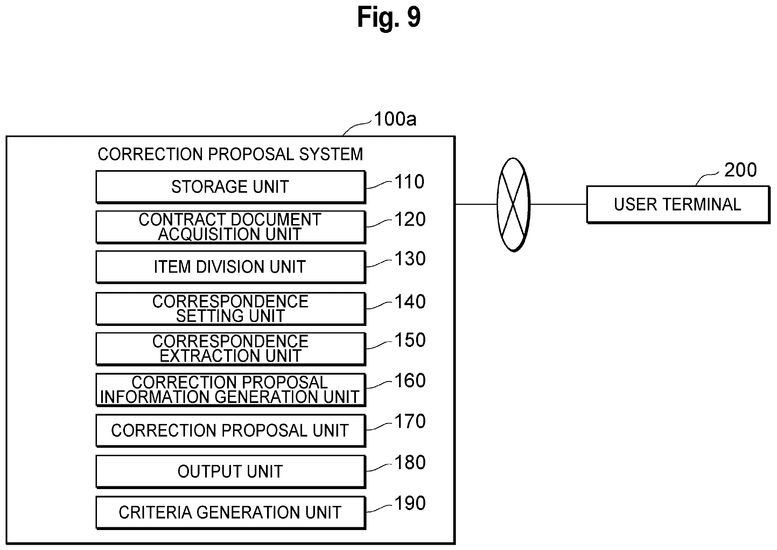

Subsequently, a first variant of the correction proposal system 100 will be described. Figure 9 is a diagram illustrating a first variant of a configuration of a correction proposal system 100a that is an embodiment of the present invention. Note that in the following, only components different from those of the correction proposal system 100 will be described, and unless otherwise mentioned, components are the same as those of the correction proposal system 100.

The correction proposal system 100a further includes an output unit 180 and a criteria generation unit 190.

As described above, the correction proposal unit 170 can accept the registration of an evaluation such as a favorite and a flag related to a proposal from a user (including a user and an organization to which the user belongs; the same applies hereinafter). At this time, the flag may be a flag related to a positive evaluation given by the user or a flag related to a negative evaluation. Giving "favorite", "like", or a star mark is an example of a positive evaluation. The star mark may be in a form indicating the degree of evaluation according to the number of stars (e.g., 3 or 5).

The correction proposal unit 170 can provide correction proposal information to the user terminal 200 based on the flag registered by the user. Specifically, the correction proposal unit 170 may display, for example, correction proposal information for which a positive evaluation given by the user is registered or correction proposal information that has received a high evaluation (e.g., correction proposal information with a high average score on a five-point scale) at a higher position to preferentially provide them to the user terminal 200 and may display correction proposal information for which a negative evaluation is registered at a lower position or not display it. This enables the correction proposal system 100a to make correction proposals more suitable for the user.

When providing correction proposal information to the user terminal 200 based on a flag registered by the user, for example, the correction proposal unit 170 may perform different processing for each attribute (e.g., position or contract type) of the contract document subject to correction proposal.

Specifically, for example, when the position in a contract document corresponding to correction proposal information for which a positive flag registered by the user is different from the position in the second contract document subject to correction proposal, the correction proposal information may not be appropriate in the second contract document. In this case, the correction proposal unit 170 may display the correction proposal information at a lower position or not display it. This makes it possible to provide correction proposal information more suitable for a contract document to be reviewed.

For example, when the contract type in a contract document corresponding to correction proposal information for which a positive flag registered by the user is different from the contract type in the second contract document subject to correction proposal, the correction proposal information may not be appropriate in the second contract document. In this case, the correction proposal unit 170 may display the correction proposal information at a lower position or not provide it. This makes it possible to provide correction proposal information more suitable for a contract document to be reviewed.

Note that the process of providing correction proposal information performed by the correction proposal unit 170 can be customized according to user settings. That is, for example, for a process of changing the display order according to the number of pieces of correction proposal information that is performed when providing correction proposal information, when the correction proposal unit 170 is configured not to perform the process according to user settings, the correction proposal unit 170 may provide the correction proposal information to the user terminal 200 without performing the process.

When providing correction proposal information, the correction proposal unit 170 can display differences between the content of the second contract document and the content of the post-correction information in such a form that they can be easily recognized by the user. For example, the differences and the non-difference parts can be displayed in different forms.

This will be specifically described with reference to Figure 6. In the screen shown in Figure 6, the second contract document is displayed in the area 610 and post-correction information is displayed in the area 621. In this case, for example, in the area 621, the correction proposal unit 170 can display characters or character strings not written in the area 610 in an emphasized manner. This enables the user to easily recognize the differences between the second contract document to be reviewed and the correction proposal information and to more easily review the second contract document.

When displaying a plurality of pieces of correction proposal information, the correction proposal unit 170 may be configured to display differences for correction proposal information selected by the user in an emphasized manner and not to display differences for correction proposal information not selected by the user in an emphasized manner. Specifically, for example, when the mouse pointer operated by the user is on the area 620, the differences between the post-correction information displayed in the area 621 and the second contract document displayed in the area 610 may be displayed in an emphasized manner, and when the mouse pointer operated by the user is on the area 630, the differences between the post-correction information displayed in the area 630 and the second contract document displayed in the area 610 may be displayed in an emphasized manner.

Note that the method of displaying differences in an emphasized manner that is performed by the correction proposal unit 170 may be, for example, displaying emphasized characters or character strings in a different color, displaying (highlighting) the background of the characters or character strings in a specific color, or enclosing the characters or character strings in a specific figure (e.g., a rectangle), and it may be other display methods as long as the user can easily distinguish the emphasized characters or character strings from characters or character strings that are not emphasized.

The emphasized display of differences by the correction proposal unit 170 may be hidden by user settings. This enables the user to switch the settings for the presence or absence of emphasized display in a situation desired by themself.

The correction proposal system 100a may further include the output unit 180 that outputs correction proposal information to an external system (e.g., the user terminal 200). At this time, the output unit 180 of the correction proposal system 100a may output correction proposal information for which a flag is registered by the user to an external system (e.g., the user terminal 200).

The output unit 180 of the correction proposal system 100a may output, for example, information indicating correspondence between a flag registered by the user and correction proposal information for which the flag is registered. Thereby, based on correction proposal information accumulated in the correction proposal system 100a, the user can consider criteria for review by the user (in particular, the user's department or company) while referring to the status of utilization and evaluation of the correction proposal information.

The correction proposal system 100a may further include the criteria generation unit 190 that generates criteria information that serves as criteria for review of contract documents by the user based on the correction proposal information. At this time, the criteria generation unit 190 of the correction proposal system 100a may generate criteria information based on correction proposal information for which a flag is registered by the user. This enables the user to acquire criteria for reviewing contract documents based on correction proposal information accumulated in the correction proposal system 100a.

The criteria generation unit 190 can generate a template of a contract document or update an existing contract document template as criteria information, for example, as an item (e.g., a clause) including correction proposal information (in particular, post-correction information) for which a positive flag is registered. The criteria generation unit 190 can generate criteria for examination by the user, a collection of examples, a handbook, and a rule book, for example, as criteria information.

The criteria generation unit 190 may generate criteria information based further on the number of pieces of correction proposal information. That is, the criteria generation unit 190 may generate criteria information based on a group of pieces of correction proposal information including a certain number or more of similar pieces of correction proposal information. Thereby, when a certain number or more of similar pieces of correction proposal information are accumulated, they can be used as criteria for review by the user, and more suitable criteria for review can be generated.

The criteria generation unit 190 may generate criteria information based on correction proposal information selected based on the user's operation (or further approval by the organization to which the user belongs) among pieces of correction proposal information. Specifically, for example, the criteria generation unit 190 displays candidates for correction proposal information used for generating the criteria information on the user terminal 200, and accepts a selection operation from the user. Then, the criteria generation unit 190 generates criteria information based on, for example, the correction proposal information selected by the selection operation. This enables the user to acquire criteria information by selecting correction proposal information suitable for generating the criteria information.

When displaying candidates for correction proposal information used for generating the criteria information on the user terminal 200, the criteria generation unit 190 can also display information useful for selecting correction proposal information. Information useful for selecting correction proposal information may be, for example, information indicating a flag registered by the user, information indicating the number of times of adoption for review of contract documents, or information indicating the number of similar pieces of correction proposal information. Specifically, for example, the criteria generation unit 190 displays correction proposal information and information indicating a flag on the user terminal 200 in association with each other. The user can generate criteria information, for example, by selecting correction proposal information having a positive flag and not selecting correction proposal information having a negative flag. This enables the user to select correction proposal information to be used for criteria information and acquire more suitable criteria information.

Note that the criteria information generated by the criteria generation unit 190 may be stored in the storage unit 110 or may be provided to an external information processing system. The criteria information generated by the criteria generation unit 190 may be editable by the user or the system administrator of the correction proposal system 100a.

### <Variant 2>

Subsequently, a second variant of the correction proposal system 100 will be described.

The correction proposal system 100 may acquire first contract documents while recognizing that corrections were made in order of corrections different from the order of corrections actually made, and generate correction proposal information. That is, the correction proposal system 100 may mistakenly recognize and process the first contract document before correction as the first contract document after correction, or mistakenly recognize and process the first contract document after correction as the first contract document before correction.

Such a case may occur, for example, when the correction proposal system 100 recognizes the order of corrections of the uploaded first contract documents based on the order of the dates and times when they are acquired by the contract document acquisition unit 120 (i.e., for example, uploaded by the user). That is, when the user first uploads the first contract document after correction to the correction proposal system 100 and then uploads the first contract document before correction to the correction proposal system 100, the first contract document after correction uploaded earlier may be managed as the first contract document before correction and the first contract document before correction uploaded later may be managed as the first contract document after correction in the correction proposal system 100.

In this case, since the pre-correction information does not indicate information before correction in the item and the post-correction information does not indicate information after correction in the item, the correction proposal information generation unit 160 may not be able to generate suitable correction proposal information.

Therefore, the contract document acquisition unit 120 can acquire the first contract documents so that they match the order of the corrections actually made. For example, the contract document acquisition unit 120 acquires contract document information including correction order information indicating the order of corrections of the first contract documents and stores it in the storage unit 110.

Specifically, for example, based on the file update dates and times of the acquired first contract documents, the contract document acquisition unit 120 can generate correction order information according to the order of dates and times indicated by the update dates and times, and store it in the storage unit 110. That is, in this case, the contract document acquisition unit 120 acquires the first contract documents assuming that the first contract documents have been amended in order of dates and times indicated by the update dates and times. Then, the item division unit 130 generates item information having item IDs corresponding to the order of corrections actually made based on the contract document information including the correction order information.

This enables the correction proposal system 100 to manage the first contract document before correction and the first contract document after correction in order of corrections actually made and enables the correction proposal information generation unit 160 to generate suitable correction proposal information.

The correction proposal system 100 (e.g., the contract document acquisition unit 120) can update the contract document information (in particular, for example, the correction order information) stored in the storage unit 110 based on the user's operation. This enables the user to change the order of corrections of the first contract documents after uploading the contract documents. In this case, the item division unit 130 may perform a process of dividing the content of the contract documents by item included in the contract documents based on the contract document information updated according to the swapping operation performed by the user.

The swapping operation performed by the user may be, for example, an operation of selecting and moving an icon indicating a first contract document displayed on the display unit of the user terminal 200 according to the order of corrections (e.g., a drag operation).

Note that the swapping operation performed by the user may be performed, for example, when or after a first contract document is uploaded, when or after a sequence ID is given in response to the upload of a first contract document, when or after a plurality of first contract documents are integrated into one sequence ID, or when or after a plurality of sequence IDs are integrated into one sequence ID.

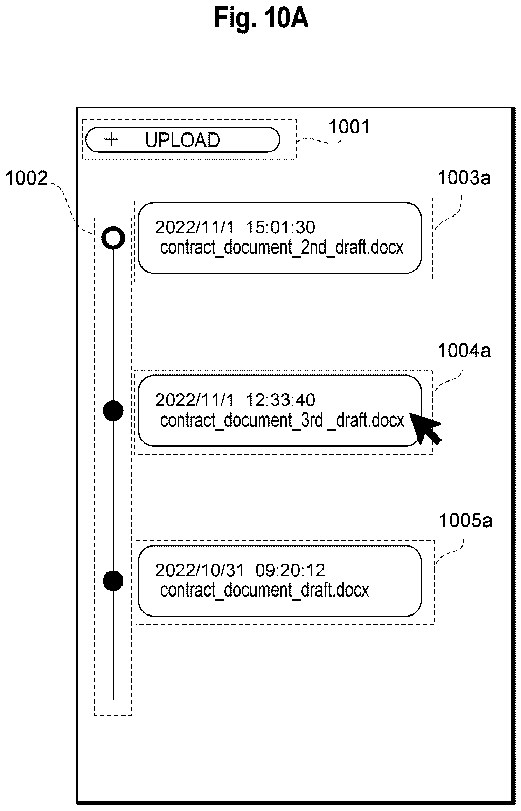

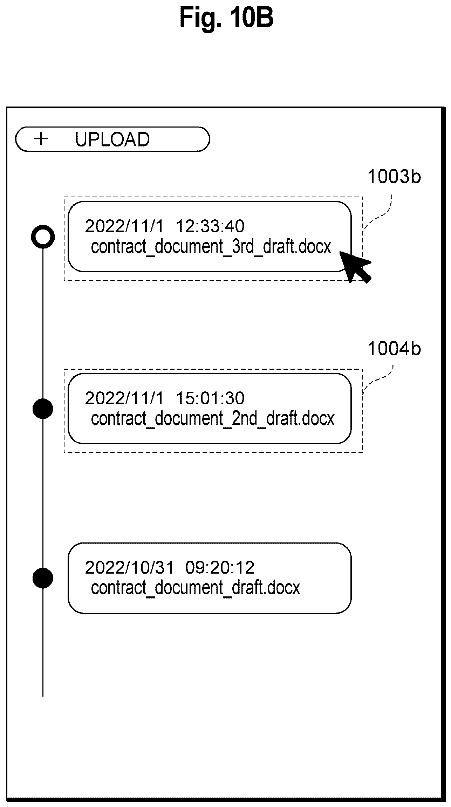

Figures 10A and B are diagrams illustrating an example of a screen for performing an operation of changing the order of corrections to the first contract document. Figures 10A and B are displayed, for example, on the display unit of the user terminal 200. The screen shown in Figure 10A shows an example of a screen when the order of corrections to the first contract document is incorrectly recognized and displayed. The screen shown in Figure 10B shows an example of a screen displayed after the order of corrections to the first contract document is changed.

The screen shown in Figure 10A includes an area 1001 selected by the user when uploading a first contract document, an area 1002 indicating the order of corrections to uploaded first contract documents, and an area 1003a, an area 1004a, and an area 1005a for displaying an icon indicating an uploaded first contract document. For example, information indicating the date and time when a first contract document was uploaded and information indicating the file name of the first contract document are displayed in the area 1003a, the area 1004a, and the area 1005a.

The screen shown in Figure 10A shows that the first contract document corresponding to the icon displayed at the top of the display unit is a first contract document amended from the first contract document corresponding to the icon displayed one below. In the screen shown in Figure 10A, the correction proposal system 100 mistakenly recognizes that the corrections were made in order of the dates and times when the first contract documents were uploaded, and it is shown that the first contract document of the second draft was created by amending the first contract document of the third draft. In this case, the user changes the order of corrections to the correct order.

Specifically, the user selects an icon indicating the first contract document to be swapped (e.g., an icon displayed in the area 1004a) and drags it to the correct position (in this case, the top). The correction proposal system 100 updates the contract document information (in particular, for example, the correction order information) stored in the storage unit 110 in response to the swapping operation.

As a result, as shown in the screen shown in Figure 10B, an icon indicating the first contract document of the third draft is displayed in an area 1003b, and an icon indicating the first contract document of the second draft is displayed in an area 1004b.

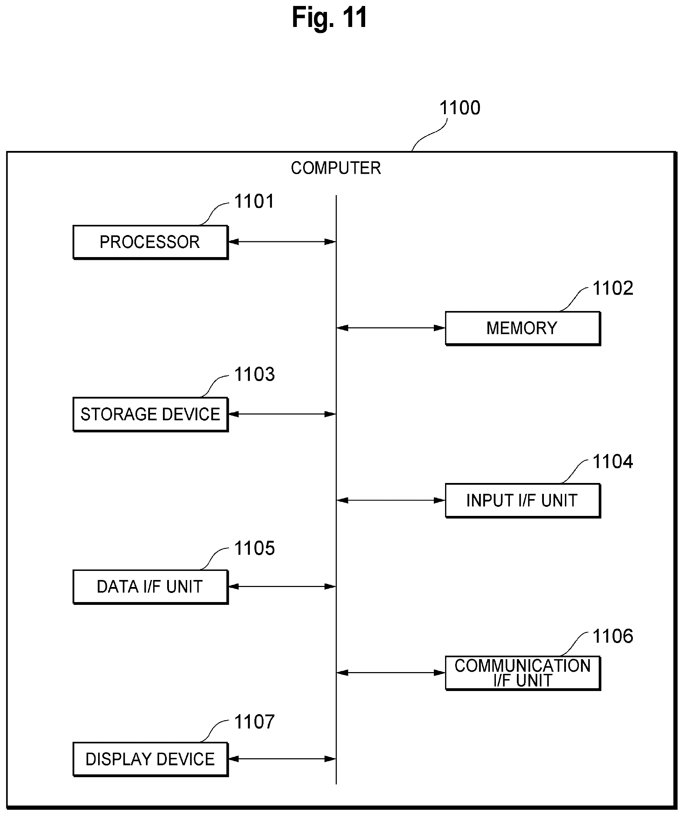

Next, an example of a hardware configuration when the correction proposal system 100 is implemented by a computer 1100 will be described with reference to Figure 11. Figure 11 is a diagram illustrating an example of a hardware configuration of the computer 1100.

As shown in Figure 11, the computer 1100 includes, for example, a processor 1101, a memory 1102, a storage device 1103, an input I/F unit 1104, a data I/F unit 1105, a communication I/F unit 1106, and a display device 1107.

The computer 1100 may be, for example, a server computer, a personal computer (e.g., a desktop, a laptop, and a tablet), a media computer platform (e.g., a cable, a satellite set-top box, and a digital video recorder), a handheld computer device (e.g., a PDA and an e-mail client), other types of computers, or a communication platform.

The processor 1101 is a control unit that controls various processes in the computer 1100 by executing a program stored in the memory 1102.

The memory 1102 is, for example, a storage medium such as a RAM (Random Access Memory). The memory 1102 temporarily stores a program code of a program executed by the processor 1101 and data required at the time of executing a program.

The storage device 1103 is, for example, a non-volatile storage medium such as a hard disk drive (HDD) or a flash memory. The storage device 1103 stores an operating system and various programs for implementing the above configurations.

The input I/F unit 1104 is a device for receiving input from the user. The input I/F unit 1104 is, for example, a keyboard, a mouse, a touch panel, various sensors, a wearable device, and the like. The input I/F unit 1104 may be connected to the computer 1100 via an interface such as USB (Universal Serial Bus), for example.

The data I/F unit 1105 is a device for inputting data from outside the computer 1100. The data I/F unit 1105 is, for example, a drive device for reading data stored in various storage media. The data I/F unit 1105 may be provided outside the computer 1100. When the data I/F unit 1105 is provided outside the computer 1100, the data I/F unit 1105 is connected to the computer 1100 via an interface such as USB, for example.

The communication I/F unit 1106 is a device for performing data communication with a device outside the computer 1100 by wire or wireless via a network such as the Internet. The communication I/F unit 1106 may be provided outside the computer 1100. When the communication I/F unit 1106 is provided outside the computer 1100, the communication I/F unit 1106 is connected to the computer 1100 via an interface such as USB, for example.

The display device 1107 is a device for displaying various information. The display device 1107 is, for example, a liquid crystal display, an organic EL (Electro-Luminescence) display, a wearable device display, and the like. The display device 1107 may be provided outside the computer 1100. When the display device 1107 is provided outside the computer 1100, the display device 1107 is connected to the computer 1100 via a display cable or the like, for example. When a touch panel is adopted as the input I/F unit 1104, the display device 1107 may be configured integrally with the input I/F unit 1104.

As described above, an embodiment of the present invention has been described. By using the correction proposal method, the correction proposal system 100 can store pre-correction information and post-correction information in a memory in association with each other, and provide correction proposal information in a second contract document based on the post-correction information. This enables the user to receive a suitable correction proposal in a contract document.

The correction proposal system 100 can provide correction proposal information based on the post-correction information associated with the pre-correction information of an item in the first contract document that have a high degree of relevance to a target item in the second contract document. This enables the user to receive a correction proposal based on the post-correction information related to the target item.

The correction proposal system 100 can provide the user terminal 200 with correction proposal information including the post-correction information. This enables the user to receive a correction proposal based on a past correction result.

The correction proposal system 100 can provide a plurality of pieces of correction proposal information associated with information indicating a predetermined order. This enables the correction proposal system 100 to provide the plurality of pieces of correction proposal information to the user terminal 200 according to the predetermined order.

The correction proposal system 100 can provide the user terminal 200 with correction proposal information including comment information given by the user in making a correction in the first contract document. The correction proposal system 100 can provide the user terminal 200 with correction proposal information including at least one of the position and contract type in the first contract document. This enables the user to receive a suitable correction proposal in a contract document based on contract document information related to the first contract document amended in the past.

The correction proposal system 100 can generate display data for displaying information indicating the target item and correction proposal information on the user terminal 200. This enables the user to amend the target item while referring to the correction proposal information.

The correction proposal system 100 can generate display data for displaying a difference between the information indicating the target item and the correction proposal information in an emphasized manner. This enables the user to grasp the difference and then more easily amend the target item.

Based on the user's operation through the user terminal 200, the correction proposal system 100 can swap pre-correction information and post-correction information stored in the memory in association with each other, store them in association with each other, and provide correction proposal information based on the swapped post-correction information. As a result, even when acquiring first contract documents while recognizing that corrections were made in order of corrections different from the order of corrections actually made, the correction proposal system 100 can swap them so that they match the order of corrections actually made, and as a result, can provide suitable correction proposal information to the user terminal 200.

Note that the present embodiments are for facilitating understanding of the present invention, and are not for interpreting the present invention in a limited way. The present invention may be modified/improved without departing from the spirit thereof, and the present invention includes equivalents thereof.

The processes and procedures according to the present disclosure may be implemented not only by the apparatus expressly described in the embodiments but also by software, hardware, or a combination thereof. Specifically, the processes and procedures described herein may be realized by implementing logic corresponding to the processes on a medium such as an integrated circuit, a volatile memory, a non-volatile memory, a magnetic disk, or an optical storage. Regarding the processes and procedures described herein, those processes and procedures may be implemented as computer programs, and may be performed by various computers including terminal devices and server devices.

As used herein, the processes and procedures described herein to be performed by a single device, piece of software, component, and/or module may be performed by a plurality of devices, a plurality of pieces of software, a plurality of components, and/or a plurality of modules. As described herein, various information described to be stored in a single memory and storage device may be distributedly stored in a plurality of memories included in a single device or in a plurality of memories distributed across a plurality of devices. Furthermore, the plurality of pieces of software and hardware described herein may be implemented by integrating them into fewer components or by decomposing them into more components.

### Reference Signs List

- 100: correction proposal system
- 110: storage unit
- 120: contract document acquisition unit
- 130: item division unit
- 140: correspondence setting unit
- 150: correspondence extraction unit
- 160: correction proposal information generation unit
- 170: correction proposal unit
- 180: output unit
- 190: criteria generation unit
- 200: user terminal
- 1100: computer
- 1101: processor
- 1102: memory
- 1103: storage device
- 1104: input I/F unit
- 1105: data I/F unit
- 1106: communication I/F unit
- 1107: display device

## Claims

1. A correction proposal method, wherein a processor
stores pre-correction information that is content before correction of an item in a first contract document and post-correction information that is an item after correction amended from the item before correction in a memory in association with each other, and
provides correction proposal information regarding proposal of a correction to a target item in a second contract document different from the first contract document based on the post-correction information.

2. The method according to claim 1, wherein the correction proposal information is based on the post-correction information associated with pre-correction information of an item in the first contract document that has high degree of relevance to a target item in the second contract document.

3. The method according to claim 2, wherein the degree of relevance is a degree of relevance based on at least one of content of the pre-correction information and the target item, a position or a contract type in the first contract document and the second contract document, and an issue included in the pre-correction information and the target item.

4. The method according to any one of claims 1-3, wherein the correction proposal information includes the post-correction information.

5. The method according to claim 4, wherein
the correction proposal information includes a plurality of pieces of correction proposal information, and
each of the plurality of pieces of correction proposal information is associated with information indicating a predetermined order.

6. The method according to claim 4, wherein the correction proposal information further includes comment information given by a user when amending the item before correction.

7. The method according to any one of claims 1-3, wherein the correction proposal information further includes at least one of a position and a contract type in the first contract document.

8. The method according to any one of claims 1-3, wherein the correction proposal method further comprises the processor generating display data for displaying information indicating the target item and the correction proposal information on a user terminal.

9. The method according to claim 8, wherein the display data includes display data for displaying a difference between the information indicating the target item and the correction proposal information in an emphasized manner.

10. The method according to any one of claims 1-3, wherein
the correction proposal method further comprises the processor swapping pre-correction information and post-correction information stored in the memory in association with each other and storing the swapped pre-correction information and post-correction information in association with each other, based on a user's operation through a user terminal, and
providing the correction proposal information comprises providing correction proposal information based on the swapped post-correction information.

11. A method, wherein a processor stores, in a memory, correction proposal information in which pre-correction information that is content before correction of an item in a first contract document is associated with post-correction information that is an item after correction amended from the item before correction.

12. A correction proposal system comprising at least one processor, wherein
the at least one processor is configured to perform a process for
storing pre-correction information that is content before correction of an item in a first contract document and post-correction information that is an item after correction amended from the item before correction in a memory in association with each other, and
providing correction proposal information regarding proposal of a correction to an item in a second contract document different from the first contract document based on the post-correction information.

13. A correction proposal program for implementing a process for a processor to
store pre-correction information that is content before correction of an item in a first contract document and post-correction information that is an item after correction amended from the item before correction in a memory in association with each other, and
provide correction proposal information regarding proposal of a correction to a target item in a second contract document different from the first contract document based on the post-correction information.
